Europäisches Patentamt

**European Patent Office**

Office européen des brevets

(11) Publication number:

**0 195 821**
**A1**

(12) **EUROPEAN PATENT APPLICATION**

published in accordance with Art. 158(3) EPC

(21) Application number: 85904666.6

(22) Date of filing: 12.09.85

Data of the international appli-
cation taken as a basis:

(86) International application number:
**PCT/JP 85/00507**

(87) International publication number:
**WO 86/01961 (27.03.86 86/7)**

(51) Int. Cl.⁴: **H 04 N 5/228**

(30) Priority: 14.09.84 JP 193161/84

(43) Date of publication of application: 01.10.86
Bulletin 86/40

(84) Designated Contracting States: AT DE FR GB NL

(71) Applicant: **SONY CORPORATION,**
**7-35 Kitashinagawa 6-Chome Shinagawa-ku,**
**Tokyo 141 (JP)**

(72) Inventor: **TANAKA, Sadaaki Sony Corporation, 7-35,**
**Kitashinagawa 6-chome, Shinagawa-ku Tokyo 141 (JP)**

(74) Representative: **Ayers, Martyn Lewis Stanley et al, J.A.**
**KEMP & CO. 14 South Square Gray's Inn, London,**
**WC1R 5EU (GB)**

(54) **DEVICE FOR CONTROLLING BEAM CURRENT OF A TV CAMERA DEVICE.**

(57) A device for controlling beam current of a TV camera
device, wherein the beam current is controlled by varying
control voltage Eg applied to a beam current control elec-
trode (12) of a diode gun image pickup tube (10) relying upon
signal current Is that is obtained by scanning a photoelectric
converter film surface (14) of the diode gun image pickup
tube. The device is composed of a cathode current detector
circuit (21) which branches and detects cathode current Ic
of the diode gun image pickup tube, and a comparator
circuit (20) which compares the branched current detection
signal with the signal current detection signal, and which
produces a control signal depending upon the differential
output and sends it to the beam current control electrode.
Therefore, there is obtained a beam current control device
which makes it possible to easily obtain predetermined
gamma correction characteristics for each diode gun image
pickup tube without requiring cumbersome adjusting opera-
tions. Moreover, the device can be manufactured through
manufacturing steps that are greatly reduced compared
with the traditional manufacturing steps.

DESCRIPTION

TITLE OF THE INVENTION

BEAM CURRENT CONTROL APPARATUS FOR TELEVISION CAMERA
APPARATUS

TECHNICAL FIELD

The present invention relates to a beam current control
apparatus of a television camera apparatus which is
particularly suitable for use with a diode gun image pickup
tube.

BACKGROUND ART

In a prior art triode gun image pickup tube, as a beam
current control apparatus for keeping a scanning beam current
at an optimum value, there was known such one as shown in
Fig. 6 (see patent specification of U.S. Patent NO. 3975657
by Sato et. al).

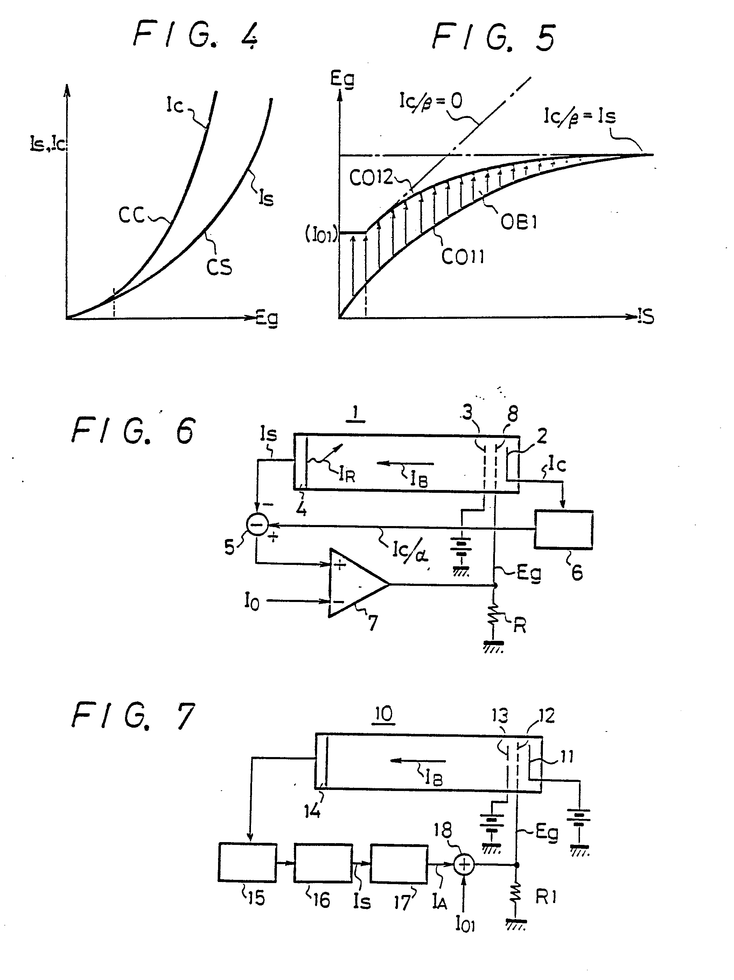

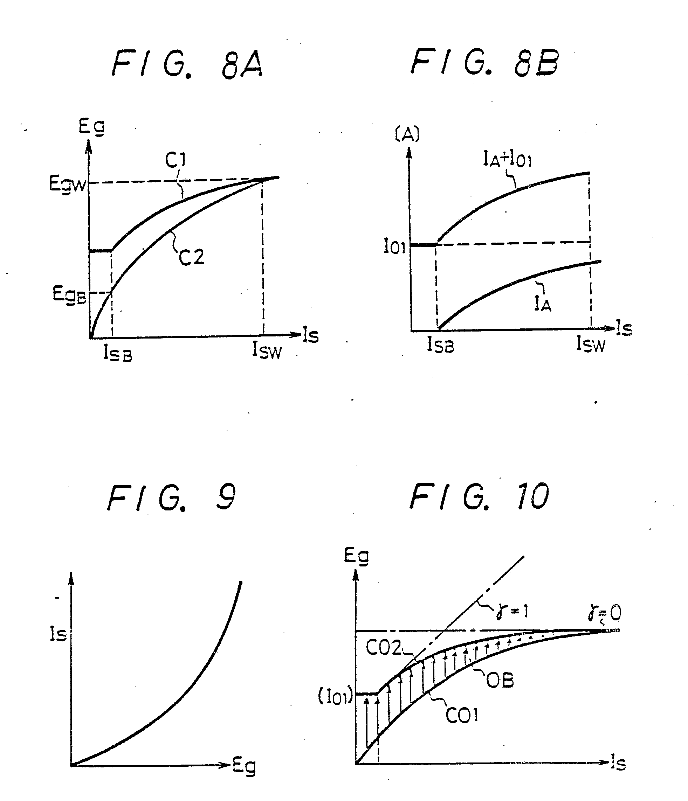

Referring to Fig. 6, a beam current emitted from a
cathode electrode 2 of a triode gun image pickup tube 1 is
passed through a beam current control electrode 8 to which a
negative control voltage is applied and accelerated by an
acceleration electrode 3. In this case, most of the beam
current is absorbed by the acceleration electrode 3 and the
remaining beam current becomes a scanning beam current $I_B$ and
is flowed toward a photo-electric conversion screen 4. In
the photo-electric conversion screen 4, a part of the
scanning beam current $I_B$ is derived as a signal current $I_S$
and is supplied to a subtracting circuit 5, while the
remaining scanning beam current becomes a returning beam
current $I_R$. Here, among the currents $I_B$, $I_S$ and $I_R$, the
following relationship is established.

$$I_B = I_S + I_R \qquad \ldots (1)$$

A shunt circuit 6 shunts a cathode current $I_C$, which is flowed through the cathode electrode 2, by $\alpha$ and supplies the resulting current to the subtracting circuit 5. By the way, in the triode gun image pickup tube 1, a current is not flowed to the beam current control electrode 8, so that between the scanning beam current $I_B$ and the cathode current $I_C$, there is established a proportional relationship which is expressed as

$$I_B = 1/\alpha\ I_C \qquad\qquad \ldots\ (2)$$

where $1/\alpha$ is the proportional constant. Therefore, if the shunt ratio of the shunt circuit 6 is selected as the proportional constant $1/\alpha$ , from the Eq. (2), the output, $I_C/\alpha$ of the shunt circuit 6 expresses the scanning beam current $I_B$ equivalently.

The subtracting circuit 5 calculates a value $(I_C/\alpha - I_S)$ which results from subtracting the signal current $I_S$ from the shunt current $I_C/\alpha$ and supplies the resulting difference output to a comparing circuit 7. Here, the shunt current $I_C/\alpha$ is equal to the scanning beam current $I_B$ from the Eq. (2) so that on the basis of the following equation, the subtracting circuit 5 carries out an operation equivalent to the operation of subtracting the signal current $I_S$ from the scanning beam current $I_B$ to thereby calculate the returning beam current $I_R$.

$$I_C/\alpha\ -\ I_S = I_B - I_S = I_R\ \ \ldots\ (3)$$

The comparing circuit 7 compares this returning beam current $I_R$ with a reference current $I_0$ having a predetermined constant value. The resulting error output current is converted to a voltage by a resistor R and is fedback to the beam current control electrode 8 as a control signal, whereby the scanning beam current $I_B$ is controlled such that the returning beam current $I_R$ coincides with the reference current $I_0$.

As described above, if the scanning beam current $I_B$ is controlled such that the returning beam current $I_R$ becomes the constant value $I_0$, it becomes possible to avoid such a phenomenon that the scanning beam current lacks relative to an amount of light incident on the television camera.

By the way, in a television camera apparatus of a high quality in which a resolution thereof is high and a residual image is less, there is employed a diode gun image pickup tube instead of the triode gun image pickup tube.

However, in the diode gun image pickup tube, the potential of the beam current control electrode may take a positive value, for example, as in - 2 (V) to + 7 (V) relative to the cathode electrode frequently. In that case, a current is flowed from the beam current control electrode to the cathode electrode so that the proportional relation in the Eq. (2) is not established any more. Accordingly, the beam current control apparatus of Fig. 6, which presupposes that the proportional relation between the scanning beam current $I_B$ and the cathode current $I_C$ be established can not be applied to the diode gun image pickup tube.

In view of such aspect, as the beam current control apparatus for the diode gun image pickup tube, there is proposed in the art such one as shown in Fig. 7 (see U.S. Patent NO. 3999011 by Sato et. al). Referring to Fig. 7, in a diode gun image pickup tube 10, a beam current emitted from cathode electrode 11 is passed through a beam current control electrode 12 and accelerated by an acceleration electrode 13, while the beam diameter is stopped by the acceleration electrode 13 and then flowed to a photo-electric conversion screen 14. The photo-electric conversion screen 14 receives the scanning beam current $I_B$ and generates a signal current $I_S$ corresponding to the incident light amount, which is supplied to a black clip circuit 15.

The black clip circuit 15 clips the signal current $I_S$ at its portion lower than the black level of the video signal and supplies it to a white clip circuit 16, while the white clip circuit 16 clips the input signal at its portion higher than the white clip of the video signal. Accordingly, the signal current $I_S$ by which a gradation (tone) can be reproduced correctly in an incident light amount range of a predetermined range and by which the video signals having levels outside this range are generated as white and black is supplied to a gamma correction circuit 17. In other words, as shown in Fig. 8A, the black clip circuit 15 clips the signal current $I_S$ at a minimum value $I_{SB}$, while the white clip circuit 16 clips the signal current $I_S$ at a maximum value $I_{SW}$.

The gamma correction circuit 17 corrects such a phenomenon that when the incident light amount relative to the diode gun image pickup tube 10 is sufficiently large, the scanning beam current can not follow such incident light amount and becomes insufficient. That is, in the diode gun image pickup tube 10, a response characteristic of the signal current $I_S$, when a control voltage Eg to the beam current control electrode 12 is changed, is non-linear as shown in Fig. 9 and the inclination of a characteristic curve of control voltage Eg - signal current $I_S$ is small when the control voltage Eg is in a relatively low range and becomes large when it becomes high.

In this characteristic curve, a region in which the control voltage Eg is relatively small and accordingly, the inclination is small (that is, the curve is gentle) is produced because the scanning beam current $I_B$ of the diode gun image pickup tube 10 is insufficient. While, in a region in which the control voltage Eg is relatively large and accordingly, the inclination is large (that is, the region in which the curve is steep), the scanning beam current $I_B$ of the diode gun image pickup tube 10 becomes too much, so that such a fear that a so-called oscillation phenomenon will take place becomes large.

Here, the oscillation phenomenon means such a phenomenon that when the amount of the scanning beam current becomes too much, the diameter of the beam on the photo-electric conversion screen 14 is widened so that an accumulated charge of a picture element adjacent to the scanned picture is discharged.

The gamma correction circuit 17 carries out such a correction that when the control voltage Eg is generated on the basis of the signal current $I_S$, the signal current $I_S$ - control voltage Eg characteristic is given a reverse characteristic as shown in Fig. 10. In other words, a ratio (this is expressed by $\gamma$ ) of the control voltage Eg relative to the signal current $I_S$, accordingly, the change of the inclination of the characteristic curve is changed reversely relative to the change of the inclination of the control voltage Eg - signal current $I_S$ in Fig. 9.

To this end, firstly, the inclination of a region in which the signal current $I_S$ is relatively small (that is, a region in which the amount of the scanning beam current $I_B$ becomes insufficient) is increased (increased to be a value near $\gamma = 1$), whereby the rising-up of the control voltage Eg is made large. As a result, the inclination of the portion in which the characteristic curve in Fig. 9 is gentle can be corrected to become approximately a straight line, whereby the scanning beam current $I_B$ can be corrected so as not to become insufficient.

Secondly, the inclination of a region in which the signal current $I_S$ is relatively large (that is, a region in which the scanning beam current $I_B$ becomes too much) is reduced (reduced to be a value near $\gamma = 0$), thereby the rising-up of the control voltage Eg is suppressed. As a result, the region of the portion in which the characteristic curve in Fig. 9 is steep can be suppressed to become horizontal so that it is possible to avoid the oscillation phenomenon which is caused by the fact that the amount of the scanning beam current $I_B$ is too much.

In practice, according to the gamma correction in Fig. 10, after a minimum characteristic curve CO1 by which the beam amount does not become insufficient is determined, a maximum characteristic curve CO2 forming a tolerable region (this is indicated by an over-beam region OB) in which the scanning beam current $I_B$ is generated without causing the oscillation is determined, the upper limits of the characteristic curves CO1 and CO2 are set to be the white clip level by the white clip circuit 16 and the over-beam amount is set so as to be increased with respect to the range in which the signal current $I_S$ is near 0, whereby the image pickup tube 10 can operate without difficulty.

In order to realize such signal current $I_S$ - control voltage Eg characteristic, the gamma correction circuit 17 is supplied with the signal current $I_S$ through the black clip circuit 15 and the white clip circuit 16 and supplies a gamma correction current $I_A$ (Fig. 8B), which is determined by the value of the signal current $I_S$, to an adding circuit 18. The adding circuit 18 adds a reference current $I_{01}$ (Fig. 8B) to the gamma correction current $I_A$ and flows an added current $I_A + I_{01}$ (Fig. 8B) through a resistor Rl, which is then converted to a voltage and thereby a control voltage $E_{g1}$ (a curve Cl in Fig. 8A) to the beam current control electrode 12 is generated.

In the circuit arrangement in Fig. 7, the gamma correction curve Cl (Fig. 8A) produced by the adding circuit 18 becomes, when the signal current $I_S$ is the value $I_{SB}$ indicating the black level, a control voltage 2 $E_{gB}$ which is twice the minimum control voltage $E_{gB}$ under which the beam amount does not become insufficient to thereby produce much the over-beam, while when the signal current $I_S$ is equal to the white clip value $I_{SW}$, the beam current is inherently large so that the over-beam does not take place substantially. Further, the gamma correction curve Cl becomes, when the signal current $I_S$ is equal to the value which is to be clipped by the black clip circuit 15, the same control voltage 2 $E_{gB}$ as in the case of the signal current $I_{SB}$ of black level, while when the signal current $I_S$ is equal to the value to be clipped by the white clip circuit 16, it becomes a control voltage $E_{gW}$ as in the case of treating the signal current $I_{SW}$. Here, the control voltage $E_{gW}$ of the

white clip is seleted to have the scanning beam current, for example, 10 times the control voltage $E_{gB}$ of the black clip.

Thus, in response to the signal current $I_S$ and in accordance with the gamma correction curve Cl, the control voltage Eg to the beam current control electrode 12 is changed. As a result, it is possible to prevent the beam current from becoming insufficient relative to the incident light amount and also it is possible to control the beam current without causing the so-called oscillation phenomenon.

However, the control voltage Eg - signal current $I_S$ characteristic shown in Fig. 9 is a little different in each diode gun image pickup tube so that the gamma correction characteristic curve Cl must be provided at every diode gun image pickup tube.

In practice, in the prior art, while checking a cathode ray tube on which the signal current is reproduced as a picture image, a skillful specialist changes the circuit constant of the gamma correction circuit 17 without causing the oscillation phenomenon and without causing the beam amount to become insufficient and then determines a proper gamma correction characteristic Cl at every diode gun image pickup tube through many processes.

In view of the above mentioned aspect, this invention is to provide a beam current control apparatus for a diode gun image pickup tube which can easily obtain a gamma correction characteristic suitable for the characteristic of each image pickup tube without such cumbersome processes.

DISCLOSURE OF INVENTION

In order to solve such problems, according to the present invention, there is provided a cathode current detecting circuit 20 for shunting and detecting a cathode current $I_C$ of a diode gun image pickup tube 10 and a comparing circuit 20 for comparing a shunted and detected signal $I_C/\beta$ and a signal current detected signal $I_S$ and for supplying a control signal $E_g$ to a beam current control electrode 12 on the basis of a difference output therefrom.

The cathode current detecting circuit 21 detects and shunts the cathode current $I_C$ of the diode gun image pickup tube 10 and supplies it to the inverting input terminal of the comparing circuit 20. The comparing circuit 20 is supplied with the shunted and detected signal $I_C/\beta$ from the cathode current detecting circuit 21 and the signal current detecting signal $I_C$ from the photo-electric conversion screen 14 and generates an output by which a difference $I_C/\beta - 1_S$ between these detected signals becomes constant. This output is applied to the beam current control electrode 12 as the control output $E_g$.

According to such structure, the comparing circuit 20, the beam current control electrode 12, the cathode electrode 11 and the cathode current detecting circuit 21 constitute a loop. Due to the presence of this loop, the output of the comparing circuit 20 which makes the difference $I_C/\beta - I_S$ between the input detecting signal $I_S$ and the $I_C/\beta$ to the comparing circuit 20 constant presents the gamma correction characteristic.

BRIEF DESCRIPTION OF DRAWINGS

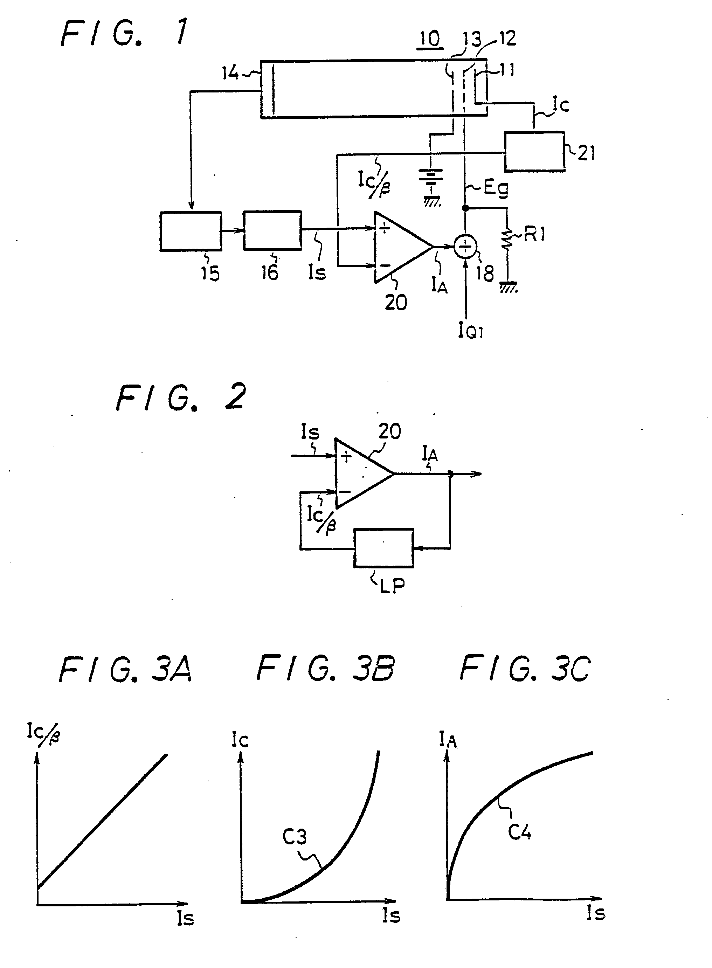

Fig. 1 is a block diagram showing one embodiment of a beam current control apparatus of a television camera apparatus according to this invention, Fig. 2 is a block diagram showing a negative feedback loop of Fig. 1 in the simplified form, Figs. 3A to 3C are graphs showing characteristics of the input and output of a comparing circuit relative to a signal current, Fig. 4 is a graph showing a control voltage Eg – signal current $I_S$ characteristic and a control voltage Eg – cathode current $I_C$ characteristic in the apparatus in Fig. 1, Fig. 5 is a graph showing a gamma correction characteristic of the apparatus in Fig. 1, Figs. 6 and 7 are block diagrams respectively showing prior art apparatus, Figs. 8A and 8B are schematic representations used to explain how to select a control voltage value relative to the signal current in the apparatus in Fig. 7, Fig. 9 is a graph showing a control voltage Eg – signal current $I_S$ characteristic of the apparatus in Fig. 7 and Fig. 10 is a graph showing a gamma correction characteristic of the apparatus in Fig. 7.

BEST MODE FOR CARRYING OUT THE INVENTION

One embodiment of this invention will hereinafter be described in detail with reference to Fig. 1 in which like parts corresponding to those of Fig. 7 are marked with the same reference numerals. A beam current control apparatus in Fig. 1 includes a comparing circuit 20 of an operational amplifier type and the signal current $I_S$ of the white clip circuit 16 is supplied to the non-inverting input terminal of the comparing circuit 20. The cathode current $I_C$ is detected by a cathode current detecting circuit 21 and a shunt current $I_C/\beta$, which results from shunting the cathode current $I_C$ by $\beta$, is supplied to the inverting input terminal of the comparing circuit 20.

The comparing circuit 20 supplies an output current $I_A$, which is the difference output $(I_C/\beta - I_S)$ between the signal

current $I_S$ and the shunt current $I_C/\beta$, to the adding circuit 18 in which it is added to the reference current $I_{01}$. The output of the adding circuit 18 is converted to a voltage by the resistor Rl and then applied to the beam current control electrode 12 to thereby form a negative feedback loop LP (Fig. 2) from the cathode electrode 11 through the cathode current detecting circuit 21 to the inverting input terminal of the comparing circuit 20.

In the circuit arrangement in Fig. 1, the system from the comparing circuit 20 through the adding circuit 18, the control electrode 12, the cathode 11, the cathode current detecting circuit 21 to the comparing circuit 20 effectively carries out the correction operation equivalent to that of the gamma correction circuit in Fig. 7.

If the control voltage Eg to the beam current control electrode 12 of the diode gun image pickup tube 10 is changed, in response thereto, as shown in Fig. 4, the changing ratios of the cathode current $I_C$ and the signal current $I_S$ are small (accordingly, the inclination of the characteristic curve is gentle) when the control voltage $E_g$ is in a relatively low range, while as the control voltage $E_g$ becomes high, the changing ratios become large (accordingly, the inclination of the characteristic curve becomes steep).

In a control voltage Eg - signal current $I_S$ characteristic curve CS of Fig. 4, the change of the control voltage Eg - cathode current Ic characteristic curve CC is examined with the signal current $I_S$ taken as a reference. With respect to the difference between the current $I_S$ and the current $I_C$ at the point at which the control voltage Eg is the same, if the current $I_S$ is indicated on the abscissa as shown in Fig. 3B, when the current $I_S$ is in a range of a small value, the changing ratio of the current $I_C$ is small (accordingly, the inclination of the curve is flat, while as the current $I_S$ becomes relatively large, the changing ratio becomes large (accordingly, the inclination of the characteristic curve becomes steep).

In practice, after such relationship is confirmed experimentally, it was understood that such relationship is very close to the relationship between the control voltage $E_g$ and the signal current $I_S$ in the characteristic curve of the control voltage Eg – signal current $I_S$ described above in connection with Fig. 9.

From this, firstly, it is understood that the circuit arrangement in Fig. 1 has the arrangement equivalent to the circuit arrangement connected with the negative feedback loop LP as shown in Fig. 2 by which when the signal current $I_S$ input to the comparing circuit 20 as its one comparing input is changed, an output changing with a relationship of the characteristic curve C3 of the signal current $I_S$ – cathode current $I_C$ shown in Fig. 3B is delivered to the output terminal of the comparing circuit 20.

On the other hand, the comparing circuit 20 generates an error signal $I_A$ by which the feedback signal $I_C/\beta$ coincides with the input signal $I_S$. Accordingly, if the input signal $I_S$ is changed rectilinearly, the feedback signal $I_C/\beta$ is fedback through the feedback loop LP as a signal changing rectilinearly (Fig. 3A). From this, the output $I_A$ of the comparing circuit 20 has a characteristic which, as shown in Fig. 3C, presents a relationship reverse to the characteristic curve C3 (Fig. 3B) of the feedback loop LP.

Here, the signal current $I_S$ - error current $I_A$ characteristic curve C4 in Fig. 3C becomes close to the gamma correction characteristic of the gamma correction circuit 17 in Fig. 7. In this connection, the characteristic (Fig. 8C) of the output signal $I_A$ of the gamma correction circuit 17 is, in principle, in a relation reverse to the control voltage $E_g$ - signal current $I_S$ characteristic curve in Fig. 9 (Fig. 10). However, since the characteristic curve (Fig. 3B) of the comparing circuit 20 is close to the characteristic curve in Fig. 9, it should be noted that the characteristic curve C4 in Fig. 3C and having a relationship reverse to that relationship is approximated to that in Fig. 8A.

Consequently, according to the circuit arrangement in Fig. 1, as shown in Fig. 5 in correspondence with Fig. 10, if the feedback signal $I_C/\beta$ obtained on the basis of the cathode current $I_C$ is set as required, taking a characteristic curve CO11 indicating the lower limit in which the amount of the scanning beam current $I_B$ does not become insufficient as a reference, it is possible to set by the reference signal $I_{01}$ a characteristic curve CO12 indicating the upper limit in which the oscillation can be avoided in consideration of providing an over-beam region OB1.

According to the circuit arrangement in Fig. 1 as set forth above, taking into the consideration the fact that the relationship of the cathode signal $I_C$ relative to the signal current $I_S$ is equivalent to the relationship of the signal current $I_S$ relative to the control voltage Eg of the prior art circuit arragement in Fig. 7, it is possible to realize the function equivalent to the gamma correction circuit 17 on the basis of the cathode current $I_C$. Consequently, since the so-called gamma correction curve can utilize the inherent characteristic of the cathode current $I_C$, as compared with the prior art in which this correction curve is made by the adjusting work of the gamma correction circuit 17, it is possible to reduce the cumbersome work processes considerably.

- 15 -

0195821

## CLAIM

In a beam current control apparatus of a television camera apparatus in which on the basis of a signal current formed by scanning a photo-electric conversion screen of a diode gun image pickup tube, a control voltage applied to a beam current control electrode of said diode gun image pickup tube is varied to thereby control a beam current, said beam current control apparatus of a television camera apparatus being characterized in that there are provided a cathode current detecting circuit for shunting and detecting a cathode current of said diode gun image pickup tube and a comparing circuit for comparing said shunted and detected signal with said signal current detecting signal and generating, on the basis of a difference output therebetween, a control signal for said beam current control electrode.

FIG. 1

FIG. 2

FIG. 3A    FIG. 3B    FIG. 3C

# F I G. 4

# F I G. 5

# F I G. 6

# F I G. 7

FIG. 8A

FIG. 8B

FIG. 9

FIG. 10

0195821

# INTERNATIONAL SEARCH REPORT

International Application No. PCT/JP85/00507

## I. CLASSIFICATION OF SUBJECT MATTER (if several classification symbols apply, indicate all) [3]

According to International Patent Classification (IPC) or to both National Classification and IPC

Int. Cl[4] H04N 5/228

## II. FIELDS SEARCHED

### Minimum Documentation Searched [4]

| Classification System | Classification Symbols |
|---|---|
| IPC | H04N 5/228 |

### Documentation Searched other than Minimum Documentation to the Extent that such Documents are Included in the Fields Searched [5]

| | |
|---|---|
| Jitsuyo Shinan Koho | 1970 – 1985 |
| Kokai Jitsuyo Shinan Koho | 1971 – 1985 |

## III. DOCUMENTS CONSIDERED TO BE RELEVANT [14]

| Category[*] | Citation of Document, [16] with indication, where appropriate, of the relevant passages [17] | Relevant to Claim No. [18] |
|---|---|---|
| Y | JP, A, 57-162886 (Hitachi Denshi, Ltd.), 6 October 1982 (06. 10. 82) (Family: none) | 1 |
| Y | JP, U, 57-160271 (Hitachi Denshi, Ltd.), 7 October 1982 (07. 10. 82) (Family: none) | 1 |
| Y | US, A, 3.999.011 (Hitachi Ltd ; Hitachi Electronics Co. Ltd), 21 December 1976 (21. 12. 76) Column 1, lines 38 to 63 | 1 |

ISA/JP

## * Special categories of cited documents: [16]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [2] | Date of Mailing of this International Search Report [2] |
|---|---|
| December 4, 1985 (04. 12. 85) | December 16, 1985 (16. 12. 85) |
| International Searching Authority [1] | Signature of Authorized Officer [20] |
| Japanese Patent Office | |

Form PCT/ISA/210 (second sheet) (October 1981)